# EUROPEAN PATENT APPLICATION

(11) **EP 2 389 848 A1**
(43) Date of publication of application: **30.11.2011**
(21) Application number: 11166355.5
(22) Date of filing: 17.05.2011
(51) Int. Cl.: A47J 31/44, A47J 31/56

(54) **Device for heating and foaming milk and related method**

(30) Priority: 28.05.2010 IT MI20100976
(71) Applicant: Gruppo Cimbali S.p.A., 20082 Binasco (MI) (IT)
(72) Inventor: Erba, Roberto, 20082, Binasco MI (IT); Ceccaroli, Stefano, 20082, Binasco MI (IT)
(74) Representative: Acco, Stefania

(57) **Abstract**

The present invention relates to a device (1) for heating and foaming milk comprising a support surface (10) for receiving a container (6) containing milk, a steam wand (5) provided with an open end (7) suitable for being immersed in the container (6), and at least one contactless temperature transducer (9) disposed in proximity to the support surface (10) for detecting the temperature of the milk when contained in the container (6). The temperature (9) transducer preferably comprises an infrared sensor (8) and the detection of the temperature of the milk takes place via detection of the temperature of at least one portion of the outer surface of the container (6).

## Description

The present invention relates to a device for heating and foaming milk.

More particularly, the present invention relates to a device for heating and foaming milk with control of the heating temperature and, preferably, of the amount of foam produced.

The invention finds a principal but not exclusive application in the field of production of espresso bar machines of the type capable of making coffee, cappuccino and the like.

The operations of heating and foaming milk for the preparation of milk-based beverages, such as cappuccino and "latte macchiato", are generally carried out by conveying a jet of steam into a container, for example a jug, containing cold milk, via a spout placed at the end of a steam pipe, indicated hereinafter as steam wand, generally provided with a check valve for controlling the flow of steam.

When the operation of heating and foaming is entrusted to an operator, the latter ends the delivery of the flow of steam after having heated the milk and having incorporated a sufficient quantity of air as to form the foam of the desired consistency.

US patent 4,753,133 describes a device for heating and emulsifying milk with the aid of a steam jet which comprises a low pressure chamber around the nozzle, having a discharge opening for the emulsion, a passage for the air return, and at least one passage for the milk which, as a result of the effect of the low pressure, enters the chamber. In this way, air, steam and milk are mixed in the chamber.

In some circumstances, the manual operations may however become rather complex and difficult to calibrate, inasmuch as in order to obtain the desired foaming at the desired temperature it is necessary to perform manoeuvres which require a specific level of skill in the field.

There are solutions which allow the automatic halting of the flow of steam when the desired temperature is reached.

Patent Application WO 03/092458 describes a device for heating and foaming milk, with control of the temperature and of the amount of foam, which makes it possible to obtain milk heated to the desired temperature without the need for the aid of an expert in the field. In particular, the device described in WO 03/092458 comprises a steam generating boiler, conveying means, (i.e. wand) provided with an open end immersible in a jug containing the milk to be heated and foamed, a first pipe for feeding in steam, connected between the boiler and the conveying means, an intercepting device placed on the first pipe, a compressor for generating pressurized air, a motor for operating the compressor, a second pipe for feeding in pressurized air, connected between the air compressor and the conveying means, a temperature-sensitive element associated with the immersible end of the conveying means for detecting the temperature of the milk in the container, a control unit connected to the intercepting device, to the pressurized air generating compressor and also to the temperature-sensitive element.

According to the technical solution illustrated above, the temperature is controlled by means of a temperature transducer connected to the immersible end of the conveying means, suitable for detecting the temperature of the milk when the end is immersed in the milk.

The Applicant has observed that, in the course of the working life of a device for heating and foaming milk, the steam wand, especially if of the articulated type, must be moved (raised, lowered, rotated, etc.) a very great number of times, if not continuously. Since the temperature transducer, such as a thermocouple, disposed on the end portion of the wand is electrically connected to a current generator and to a control unit (CPU) which are located outside the wand, one or more electrical wires necessary for the electrical connection extend along the wand. The electrical wires may therefore be damaged or even suffer fatigue fracture because of the continuous flexing due to the movement of the steam wand into which they are inserted.

The Applicant has realized that a device for heating and foaming milk, in which the control of the temperature of the milk inside the container in which it is heated and/or foamed is effected by means of a temperature sensor outside the wand, remedies the drawbacks described above.

According to a principal feature of the present invention, the device is provided with a temperature transducer without contact with the liquid to be measured. In the preferred embodiments, the temperature transducer comprises an infrared sensor. Preferably, the detection of the temperature of the liquid contained in the container takes place via detection of the temperature of at least one portion of the outer surface of the container.

Other features and advantages of the invention will become clear from the following description, provided by way of non-limiting example, with the aid of the following drawings which are shown schematically, not to scale:
- Figure 1 is a schematic perspective view of a portion of a device for heating and foaming milk according to one form of embodiment of the invention;
- Figure 2 is a simplified diagram to illustrate the principle of operation of an infrared thermometer.
- Figure 3 is a schematic perspective view of a portion of a device for heating and foaming milk according to another embodiment of the invention.

With the sole object of simplifying the description of the present invention, in the remainder of the description reference will be made in a non-limiting manner to milk, this being intended to refer also to any heatable beverage, such as water for the preparation of tea or infusions or hot chocolate.

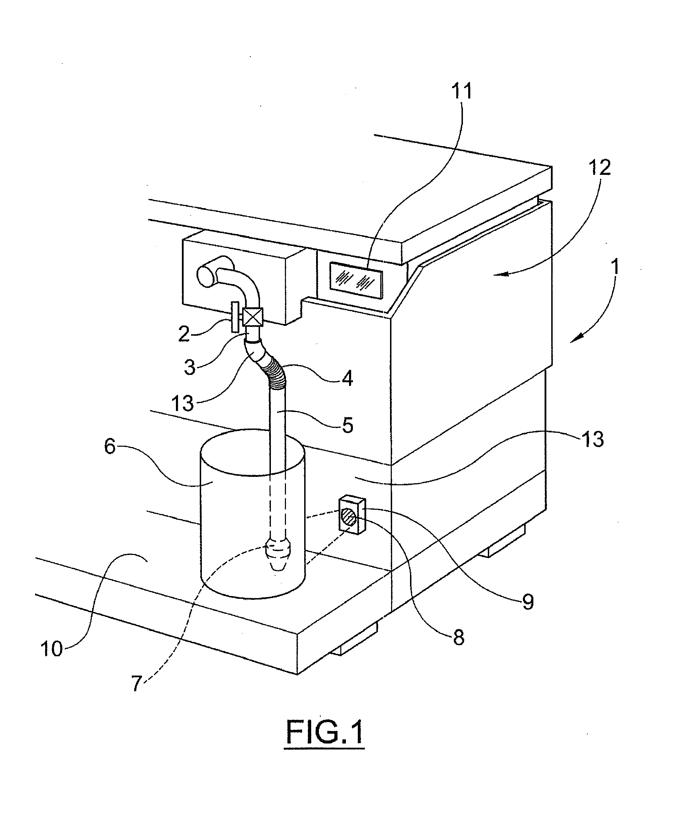

Figure 1 shows a partial perspective view of a device for heating and foaming milk according to one embodiment of the present invention. The device 1 may be part of a coffee machine apt to prepare hot beverages such as "latte macchiato" (coffee made with hot milk) and cappuccino. The device comprises a feed pipe 3 for the steam, an articulated joint 13 and a steam wand 5 having an open end 7 formed, for example, by a dispensing spout, the end being suitable for being introduced into a container 6 for the liquid to be heated and optionally to be foamed. Optionally, downstream of the articulated joint 13, the steam wand comprises a handgrip 4. The end 7 may have a single opening or may have a plurality of holes of suitable shape and size, oriented radially, axially or otherwise with respect to the steam wand, from which to cause ejection of steam and optionally of pressurized air, as described hereinafter.

The steam is generated by a steam generating boiler (not shown in the figure) and directed to the feed pipe 3. The steam generating boiler may be that present in a coffee machine intended for the heating required for the beverage.

The steam wand 5 can be raised or lowered starting from the articulated joint 13, for example by means of the handgrip 4, in such a way as to be immersed in the milk contained in the container or be removed therefrom. Alternatively, the steam wand may be able to be oriented at different angles with respect to the feed pipe 3 and/or be made of flexible material. Typically, during the heating and/or foaming stage, the open end 7 of the steam wand is completely or almost completely immersed in the milk to be heated and foamed.

The embodiment of Figure 1 provides for manual control of the steam emitted by the steam wand 5, by the operator. Arranged on the feed pipe 3 is a gate valve 2 adjustable between two positions: a first position for closure of the feed pipe and a second position for complete opening of the pipe.

When part of a coffee machine, the device may include a chassis 12 which comprises a base 10 on which the container 6 is supported.

In an embodiment, the wand 5, via a dedicated pipe, located for example inside the wand itself, conveys, in addition to a jet of steam, a flow of pressurized air causing the open end 7 of the wand to emit a mixture of steam and compressed air. For example, the compressed air is generated by a compressor driven by an electric motor (not shown), both comprised in the device. In another embodiment, the mixing of the compressed air and the steam takes place upstream of the steam wand, for example in the manner described in WO 03/092458.

In a further embodiment, to the feed pipe 3 there is directed a jet of steam and a flow of compressed air delivered by a corresponding source of pressurized air, in which the flow of pressurized air is constituted by a plurality of pulses of air of predetermined duration with pauses in between. In particular, the air delivery may take place in the manner described in patent application EP 1 776 905 A1.

Arranged in proximity to at least one region of the outer surface of the container 6 is a contactless temperature transducer 8 for contactless measurement of the temperature of the milk contained in the container. In the embodiment shown in the figure, the temperature transducer 8 is mounted on a vertical support 9 which, in addition to the transducer, houses an electronic circuit (not visible) for processing the electrical signal generated by the sensor. Preferably, the electronic circuit is a chip for conditioning the signal and which amplifies and preferably digitizes the voltages generated, which are generally very low. The processing of the signal may utilize calibrating parameters set by the manufacturer and stored in the chip for calculating the temperature. The chip is electrically connected to a control unit, for example a CPU (Computer Programmable Unit), not indicated in the drawing, which processes the data obtained and, preferably, provides on a display 11, such as an LCD display, an indication of the temperature measurement. In this way, during the heating and foaming stage, the operator can control the temperature of the milk and increase or reduce the jet of steam or steam/air by means of the gate valve 2 in order to attain or maintain a predetermined temperature value, for example approximately 70°C for a very foamy milk, or approximately 80°C for a moderately foamed milk.

In the embodiment of Figure 1, the vertical support 8 is fixed to a vertical wall 13 of the chassis 12 of the device. The height of the transducer 8 with respect to the base 10 of the chassis, and in general with respect to the vertical extent of the container, is selected in such a way that the container surface region that is measured corresponds, at least for a principal portion thereof, to the region of the container in thermal contact with the milk.

In the preferred embodiments, the contactless temperature transducer is an infrared thermometer. For example, an MLX90614 infrared thermometer produced by Melexis Semiconductors may be used.

The principle of operation of an infrared thermometer is known per se. Briefly, the radiation emitted by a warm body, i.e. infrared rays, have a wavelength which varies as a function of the temperature of the surface of the object. The thermometer captures the infrared rays emitted, which are focused, by means of an optical measuring system, onto an infrared sensor which transforms them into an analog electrical signal. In particular, the infrared sensor detects the wavelength of the radiation captured and from this it is possible to obtain the temperature. Typical thermometers that are commercially available allow very rapid contactless measurement of the temperature with an accuracy which may also be high, of the order of a tenth of a degree.

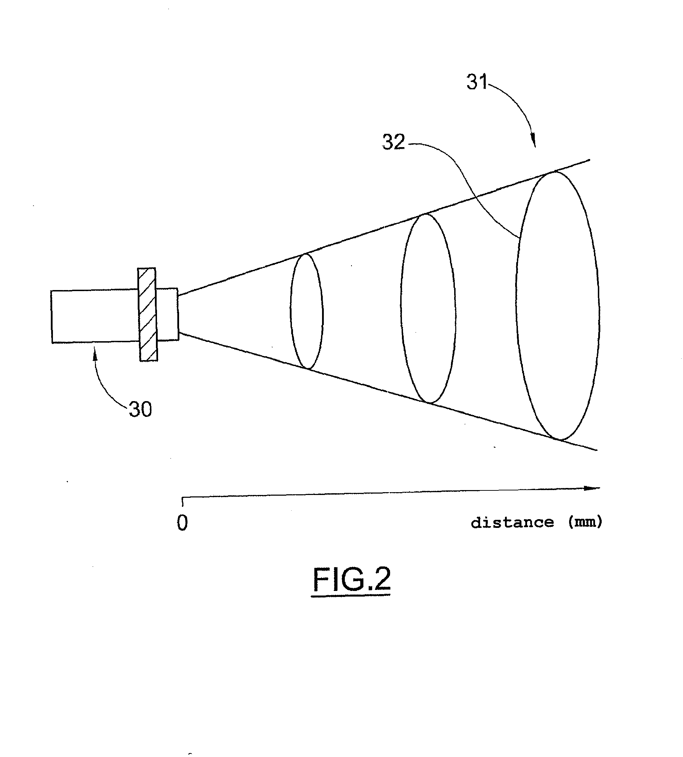

The spatial region, generally circular in shape, from which the energy emitted is captured, is indicated by field of view (FOV). It is advisable that the region to be measured is larger than the FOV in order to avoid the measured temperature being an average between the temperature of the region of interest and the "outside" temperature, for example of surfaces surrounding those of the container of liquid or of the ambience. Figure 2 is a simplified diagram which illustrates the field of view (FOV) of an infrared thermometer 30. The FOV has a circular cross-section 32 in a measurement cone 31 which is defined by the ratio between the measuring distance and the diameter of the circular measurement region. According to the measurement cone, the field of view will be greater the further the distance between the measurement surface and the radiation collecting surface of the thermometer.

Preferably, the container is positioned at a predetermined distance from the surface of the transducer which captures the radiation, indicated hereinafter as collection surface, where the distance is defined in a direction substantially perpendicular to the surface to be measured.

In one embodiment, the distance between the radiating surface and the collection surface of the transducer is between 0.5 cm and 10 cm, preferably between 1 cm and 8 cm.

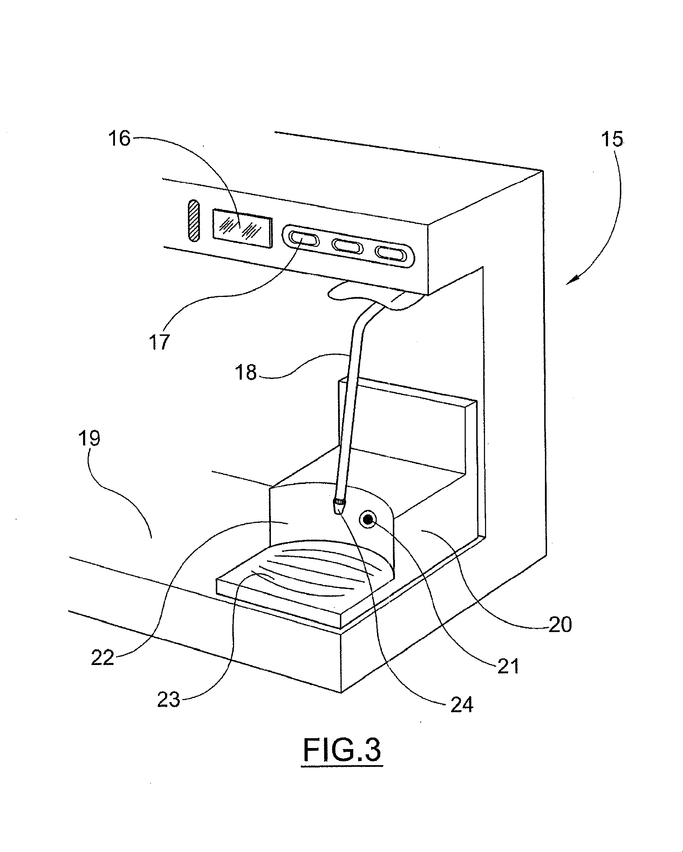

In the preferred embodiments, such as those shown in Figures 1 and 3, the temperature of the milk is determined by detection of the temperature of the outer surface of the container which contains it.

Each material is characterized by an emissivity value, E, defined as the ratio between the spectrum energy emitted by an object and that of the blackbody at the same temperature, which is assumed to be 1. Within the same material, for example steel, the emissivity may assume values which vary from 0.09 to 0.96, depending on a number of factors, such as the glossiness (opacity) of the surface, the dirt deposited on the surface or surface treatments.

In consideration of the fact that the power of the radiation emitted by the subject to be measured is proportional to the product of ε·T⁴, where T is the temperature, it is preferable to select containers having a material surface which exhibits a relatively high emissitivity value, for example greater than 0.7.

In a preferred embodiment, the container is made of steel, the outer surface of which is coated with a thin layer of heat-conductive plastics material. In another embodiment, the container is made of heat-conductive plastics material. For example, the container may be made of polyphenyl sulphide, such as CoolPoly^{(R)} D5108. In a further form of embodiment, the container is made of steel with the surface coated with a thin layer of satin finish black stainless steel. A varnish for coating the outer surface of a container made of metal (e.g. steel or aluminium) may be used to increase the emissivity value. To this end, use may be made of an opaque black powder varnish for food use with ε values of 0.93-0.98 and applied in a thickness of approximately 0.1 mm. Finally, a further example of surface material for the container is anodized aluminium (ε=0.84).

In an alternative embodiment, not shown in the drawings, the temperature of the milk is determined by detecting the temperature of the outer surface of the liquid contained in the container, by means of a contactless temperature transducer disposed above and in proximity to the outer surface of the liquid.

Figure 3 shows a partial perspective view of a device for heating and foaming milk according to a further form of embodiment of the invention. The device may be part of a coffee machine suitable for preparing hot beverages such as "latte macchiato" and cappuccino. The device 15 comprises a steam wand 18 which terminates in an open end 24 for the delivery of the steam and optionally of compressed air into a container containing milk, not shown in the drawing for the sake of greater clarity of the remaining details. The device comprises a housing element 20 for housing the container containing milk and which includes a support base 23, which comprises a support surface, and a raised portion which comprises a vertical wall 22. On the vertical wall is arranged a contactless temperature transducer 21, which may for example be mounted in the raised portion of the element 20. When the container is positioned on the support base 23, the vertical wall 22, and therefore the temperature transducer, is in proximity to at least one surface portion of the container for the measurement of the temperature of the milk contained in the container. The vertical positioning of the transducer with respect to the surface of the support base is preferably selected in such a way that the measurement region is located in the lower part of the container, which is most probably filled with the liquid to be heated. In the embodiment shown in the figure, the vertical wall 22 is concave towards the outside to facilitate the insertion and centring, with respect to the reading cone, of cylindrical containers or jugs of rounded shape. However, the shape of the vertical wall should be not understood as limitative. In general, the structure shown of the housing element may be of different shapes, for example may be a simple support element placed on the vertical wall of the chassis of the device, in a similar manner to that described with reference to Figure 1.

The device of Figure 3 is of the automatic type, in which the heating and foaming of the milk are managed by a control unit such as a programmable CPU (not shown in the drawing).

In a preferred form, the temperature transducer 21 is an infrared thermometer which captures the radiation emitted at the measurement region of the container to be detected by an infrared sensor which generates an analog signal containing the information on the temperature detected. The infrared sensor is electrically connected to an electronic chip for processing the signal, of the type described previously. The signal, amplified, digitized and optionally filtered to eliminate electrical noise, is sent to the CPU for controlling the temperature. If the temperature detected deviates from a predetermined temperature, for example selected by the operator by means of an external push-button 17 connected to the CPU, a control system connected to the CPU acts on the flow of steam, or on a mixture of steam and compressed air, which are conveyed via the steam wand in such a way as to bring the temperature to the predetermined value. In an embodiment, the steam delivery may be stopped automatically when the predetermined temperature has been reached or has been maintained for a predetermined period of time. Since the steam flow is typically conveyed from a boiler via a steam pipe connected to the wand, the control system can act on an adjustable valve, connected to the CPU, in such a way as to regulate the flow which reaches the wand. In the case of heating and foaming the milk with a mixture of compressed air and steam, the compressed air generated by a compressed air source, such as a motor driven pump, is fed into a compressed air pipe which is also connected to the wand. The pipe may be provided with a valve with adjustable opening and closing connected to the CPU, in such a way as to regulate the flow of compressed air which flows into the wand together with the steam. In this way, the ratio between steam flow and air flow can be controlled and, if necessary, adjusted.

The device of Figure 3 may be provided with a display 16 for displaying the temperature detected by the temperature transducer.

In an embodiment, on the vertical wall 22 two contactless temperature transducers are disposed at a certain lateral distance from each other, for example arranged symmetrically with respect to the centre of the support surface. In this case, the signals generated by the two transducers are sent to a respective electronic chip (or to a single electronic chip) which supplies them to the CPU. The CPU therefore receives two temperature measurements and can take an average thereof in order to obtain a more accurate value of the temperature of the milk.

In a different embodiment (not shown in the figures), the device for heating and foaming milk comprises a steam wand which receives a flow of steam and includes an inlet for the intake of air and a low pressure chamber, in which the milk enters and is mixed with the steam and the air drawn in by the Venturi effect. By way of example, the steam wand may be of the type described in US 4,735,133.

## Claims

1. Device for heating and foaming milk comprising:
- a support surface for housing a container containing milk;
- a steam wand provided with an open end apt to be immersed in the container, and
- at least one contactless temperature transducer disposed in proximity to the support surface for detecting the temperature of the milk when contained in the container.

2. The device of claim 1, wherein the at least one temperature transducer comprises an infrared sensor.

3. The device of claim 2, wherein the detection of the temperature of the milk takes place via detection of the temperature of at least one portion of the outer surface of the container.

4. The device of any one of claims 1 to 3, wherein on the steam wand there is arranged a manually adjustable gate valve for regulating the flow of steam conveyed along the steam wand.

5. The device of claim 4, further comprising a control unit connected to the temperature transducer and a display connected to the control unit for displaying the temperature detected.

6. The device of any one of claims 1 to 3, further comprising a steam pipe connected to the steam wand for the admission of a flow of steam into the wand, a control unit connected to the at least one temperature transducer and first control means for the flow of steam introduced into the wand, said first control means being connected to the control unit for automatically regulating the temperature of the milk by regulating the flow of steam.

7. The device of claim 6, further comprising a compressed air pipe connected to the steam wand or to the steam pipe upstream of the steam wand and second control means for the flow of compressed air, said second means being connected to the control unit for automatically regulating the degree of foaming of the milk by regulating the flow of compressed air.

8. Method for heating and foaming milk, comprising:
- positioning a container containing milk to be heated on a support surface, the container having an outer surface;
- introducing a flow of steam into the milk contained in the container by means of an open end of a steam wand, and
- contactless measuring of the temperature of the milk by means of a contactless temperature transducer positioned in proximity to the outer surface of the container, at a distance such as to allow the measurement of the temperature of a measurement portion of the outer surface of the container.

9. Method according to claim 8, wherein the temperature transducer comprises an infrared sensor and the contactless measuring of the temperature comprises detecting the radiation emitted by the measurement portion of the outer surface of the container.
